Europäisches Patentamt

European Patent Office

Office européen des brevets

(11) Veröffentlichungsnummer: **0 469 283 A2**

## EUROPÄISCHE PATENTANMELDUNG

(21) Anmeldenummer: **91110306.7**

(51) Int. Cl.5: **G01B 7/30**

(22) Anmeldetag: **22.06.91**

(30) Priorität: **28.07.90 DE 4024018**

(43) Veröffentlichungstag der Anmeldung:
**05.02.92 Patentblatt 92/06**

(84) Benannte Vertragsstaaten:
**DE FR GB IT**

(71) Anmelder: **ROBERT BOSCH GmbH**
**Postfach 10 60 50**
**W-7000 Stuttgart 10(DE)**

(72) Erfinder: **Kolberg, Gerhard, Ing.(grad.)**
**Hoefnermattenstrasse 15**
**W-7580 Buehl-Weitenung(DE)**
Erfinder: **Krämer, Wilhelm**
**Waldpark 5**
**W-7531 Eisingen(DE)**

(54) **Stellungsgeber für Gaspedal.**

(57) Ein Stellungsgeber für ein Gaspedal in Kraftfahrzeugen, der ein von der Gaspedalstellung abhängiges Stellsignal erzeugt, weist zur Erzielung einer
größeren Verschleißarmut, Robustheit und einer längeren Lebensdauer ein elastisch verformbares Bauteil (10) auf, in dessen Verformungsbereich ein Dehnungsmeßstreifen (15) befestigt ist. Der Dehnungsmeßstreifen (15) ist mit einer elektrischen Auswerteeinheit (16) verbunden, die eine Widerstandsänderung des bei Gaspedalbetätigung an der Verformung
des Bauteils (10) teilnehmenden Dehnungsmeßstreifen (15) in ein elektrisches Stellsignal umsetzt.

Fig. 1

## Stand der Technik

Die Erfindung geht aus von einem Stellungsgeber für ein Gaspedal in Kraftfahrzeugen der im Obergegriff des Anspruchs 1 definierten Gattung.

Solche Stellungsgeber dienen als Sollwertgeber für elektronische Stell- bzw. Regeleinrichtungen für die Betätigung der Luft- bzw. Kraftstoffzumeßsysteme von Brennkraftmaschinen. Die Stell- bzw. Regeleinrichtung wirkt dabei beispielsweise auf die Drosselklappe bzw. die Einspritzpumpe der Brennkraftmaschine. Der Stellungsgeber wird vom Gaspedal betätigt und gibt den gewünschten Sollwert vor.

Bei einem bekannten Stellungsgeber dieser Art (DE 34 11 456 A1) sitzt auf einer an dem Gaspedal angekoppelten Geberwelle der Schleifer eines Potentiometers. Die am Potentiometer abgenommene Spannung ist ein Maß für die Gaspedalstellung und wird in ein entsprechendes Stellsignal umgesetzt. Die Kopplung von Gaspedal und Geberwelle erfolgt im allgemeinen über ein Hebelgestänge, das die Schwenkbewegung des Gaspedals in ein Drehbewegung der Geberwelle umsetzt.

## Vorteile der Erfindung

Der erfindungsgemäße Stellungsgeber hat den Vorteil, daß er keinen Schleifer und keine Schleifringe benötigt, verschleißarm ist und damit eine große Lebensdauer aufweist und insgesamt funktionssicherer ist. Die Anzahl der erforderlichen Einzelteile ist drastisch reduziert, wodurch einerseits die Funktionssicherheit des Gesamtsystems steigt und andererseits die Herstellungskosten reduziert werden. Der erfindungsgemäße Stellungsgeber ist außerdem äußerst kompakt und benötigt einen nur geringen Einbauraum im Fahrzeug. Er kann der typenunabhängige, universell einsetzbare Baueinheit angeboten werden, auf der nur noch das Gaspedal aufgesteckt werden muß. Mit dem erfindungsgemäßen Stellungsgeber läßt sich außerdem ein optimaler Drehmomentenverlauf des Gaspedals in Abhängigkeit von dessen Betätigungswinkel erreichen.

Durch die in den weiteren Ansprüchen aufge- führten Maßnahmen sind vorteilhafte Weiterbildun- gen und Verbesserungen des im Anspruch 1 angegebenen Stellungsgebers möglich.

In einer ersten Ausführungsform der Erfindung ist das elastisch verformbare Bauteil von einer einseitig eingespannten Blattfeder gebildet, deren freies Ende vom Gaspedal etwa quer zur Längsachse der Blattfeder beaufschlagt wird. Bevorzugt bildet die Blattfeder selbst das Gaspedal, wobei sie am nicht eingespannten freien Ende einen Gummibelag zum Aufsetzen des Fußes trägt. Der Dehnungsmeßstreifen ist auf der Oberfläche der Blattfeder in deren Biegebereich an der Einspannstelle angeordnet. Diese konstruktive Gestaltung stellt eine Einfachstversion dar, die sich durch ihren preislichen Vorteil auszeichnet.

Bei einer bevorzugten Ausführungsform der Erfindung wird das elastisch verformbare Bauteil von einer zweiseitig eingespannten Blattfeder gebildet, auf welcher etwa mittig der Dehnungsmeßstreifen befestigt ist. Die Biegefeder wird mit einer vom Schwenkweg des Gaspedals abhängigen Kraft im Bereich des Dehnungsmeßstreifens auf ihrer von diesem abgekehrten Oberfläche etwa quer zu ihrer Erstreckungsrichtung beaufschlagt.

Die Kraft auf die Blattfeder wird dabei in einer ersten Ausführungsform durch einen um eine Drehachse schwenkbaren Exzenter aufgebracht, der an der Blattfeder anliegt und dessen Radius über den Schwenkwinkel zunimmt. Mit dem Exzenter ist ein quer zur Drehachse sich erstreckender Schwenkarm starr verbunden, der mit dem Gaspedal gekoppelt ist. Beim Betätigen des Gaspedals wird der Exzenter gedreht und verursacht eine Durchbiegung der Blattfeder. Der Dehnungsmeßstreifen nimmt an der Verformung teil und ändert seinen Widerstand. Die Blattfeder stellt über den Exzenter bei Entlastung das Gaspedal wieder in die Ruhestellung zurück. Voraussetzung hierfür ist lediglich eine entsprechende Abstimmung von Blattfeder und Exzenter. Durch die Reibung zwischen Exzenter und Blattfeder kommt es zu einer erwünschten Stabilisierung der Pedalstellung. Bei Fahrzeugen mit Automatikgetrieben kann auf dem Exzenter ein Nocken zum Herbeiführen des "Kick down"-Effekt vorgesehen werden.

In einer zweiten Ausführungsform der Erfindung wird die die Blattfeder etwa mittig beaufschlagende Kraft von einer an der Blattfeder anliegenden Nase eines Schwenkarms aufgebracht, der in mindestens einem etwa senkrecht zur Blattfeder sich erstreckenden Langloch schwenk- und axialverschiebbar gehalten ist. Der Schwenkarm stützt sich an einer Kulisse ab, deren Kurvenbahn bei einer Schwenkbewegung des Schwenkarms eine zur Blattfeder hin gerichtete Axialverschiebung der Nase erzwingt. Der Schwenkarm ist wiederum mit dem Gaspedal gekoppelt. Beim Betätigen des Gaspedals kommt es zu einer Schwenkung des Schwenkarms in dem Langloch. Dabei stützt sich der Schwenkarm an der Kulisse ab und wird in dem Langloch axial zur Blattfeder hin verschoben. Es kommt zu einer Durchbiegung der Blattfeder. Der im Durchbiegungsbereich der Blattfeder befestigte Dehnungsmeßstreifen nimmt an der Verformung teil und verändert seinen Widerstand. Auch hier stellt die Blattfeder über den Schwenkarm bei Entlastung das Pedal in die Ruhestellung zurück. Voraussetzung hierfür ist eine entsprechende Abstimmung von Blattfeder und Kurvenbahn der Kulisse. Durch eine optimale Auslegung der Kurvenbahn lassen sich alle gewünschten Drehmomentverläufe des Gaspedals über den Betätigungswinkel realisieren. Für Kraftfahrzeuge mit Automatikgetrieben kann auf der Kurvenbahn ein Nocken zum Herbeiführen des "Kick down"-Effekts vorgesehen werden.

Zeichnung

Die Erfindung ist anhand von in der Zeichnung dargestellten Ausführungsbeispielen in der nachfolgenden Beschreibung näher erläutert. Es zeigen:

Fig. 1 und 2    einen Stellungsgeber gemäß einem ersten Ausführungsbeispiel in Draufsicht (Fig. 1) bzw. Seitenansicht (Fig. 2),

Fig. 3    eine Draufsicht eines Stellungsgebers gemäß einem zweiten Ausführungsbeispiel,

Fig. 4    einen Schnitt längs der Linie IV-IV in Fig. 3,

Fig. 5    eine Draufsicht eines Stellungsgebers gemäß einem dritten Ausführungsbeispiel, teilweise geschnitten,

Fig. 6    einen Schnitt längs der Linie VI-VI in Fig. 5.

Beschreibung der Ausführungsbeispiele

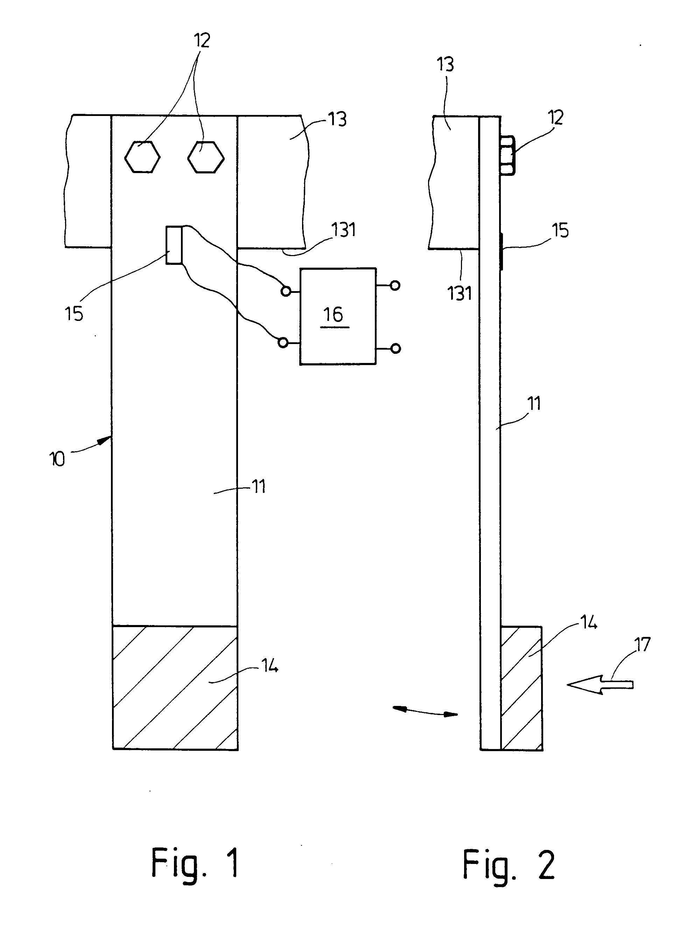

Der in Fig. 1 und 2 skizzierte Stellungsgeber für ein Gaspedal in Kraftfahrzeugen stellt eine sehr einfache Version dar. Er weist ein elastisch verformbares Bauteil 10 in Form einer einseitig eingespannten Blattfeder 11 auf, die an einem Ende mittels zweier Schrauben 12 auf einer Platine 13 befestigt ist. Am gegenüberliegenden freien Ende trägt die Blattfeder 11 einen Gummibelag 14, der als Auflagefläche für den Fuß des Kraftfahrers dient. Die Blattfeder 11 ist von einer solchen Länge, daß sie gleichzeitig das Gaspedal des Kraftfahrzeugs bildet. Wird durch den auf den Gummibelag 14 aufgesetzten Fuß des Kraftfahrers eine Kraft in Richtung Pfeil 17 (Fig. 2) aufgebracht, so biegt sich die Blattfeder 11 im Bereich ihrer Einspannstelle an der Unterkante 131 der Platine 13 durch. In diesem Verformungsbereich ist ein Dehnungsmeßstreifen 15 angeordnet, und zwar auf der gleichen Oberseite der Blattfeder 11, auf der auch der Gummibelag 14 aufgebracht ist. Durch die Durchbiegung der Blattfeder 11 wird der Dehnungsmeßstreifen 15 gestreckt und ändert dadurch seinen elektrischen Widerstand. Aus dieser Widerstandsänderung wird in einer mit dem Dehnungsmeßstreifen 15 elektrisch verbundenen Auswerteeinheit 16 ein elektrisches Stellsignal erzeugt, das ein Maß für die Größe der Streckung des Dehnungsmeßstreifens 15 und damit ein Maß für die Auslenkung der Blattfeder 15 infolge der in Richtung Pfeil 17 wirkenden Kraft ist.

Die Auswerteeinheit ist im einzelnen nicht dargestellt und ist Stand der Technik. Beispielsweise kann der Dehnungsmeßstreifen 15 in einer sog. Vollbrückenschaltung eingebunden sein, die bei nicht betätigtem Gaspedal abgeglichen, also stromlos ist. Durch die Widerstandänderung des Dehnungsmeßstreifens 15 infolge Gaspedalbetätigung wird dieser Abgleich gestört und es fließt im Brückenzweig ein Strom, der ein Maß für die Auslenkung des Gaspedals ist.

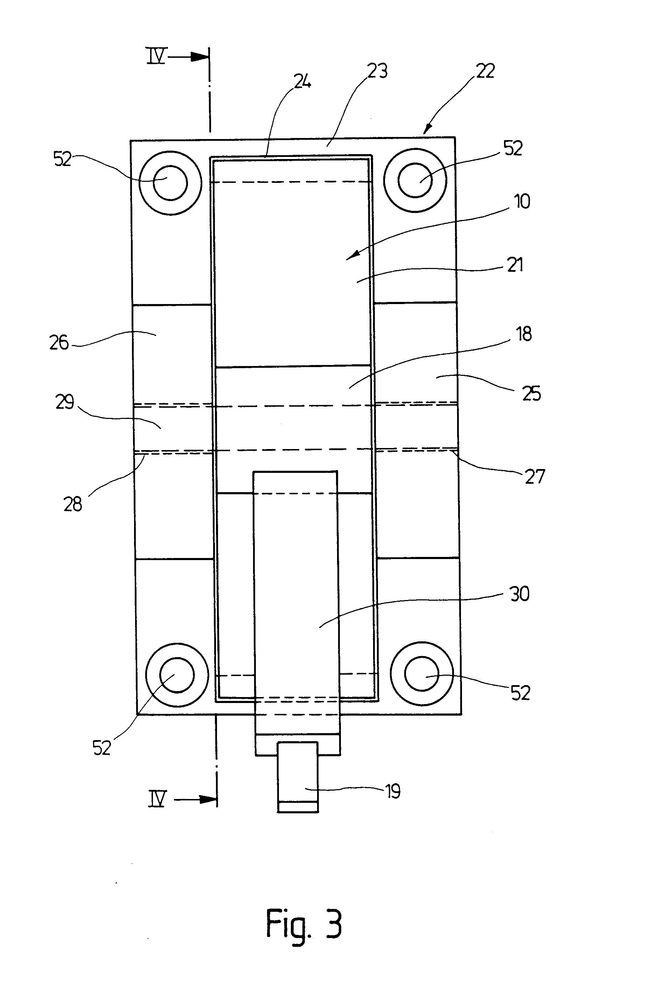

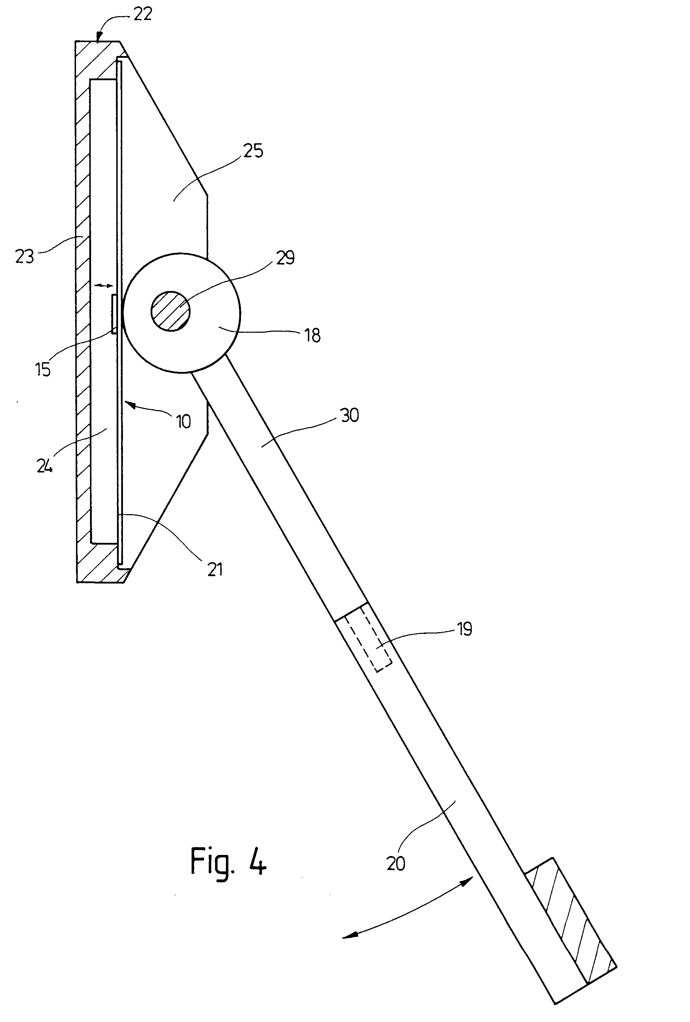

In dem in Fig. 3 und 4 dargestellten Stellungsgeber wird das elastisch verformbare Bauteil 10 wiederum von einer Blattfeder 21 gebildet, die hier allerdings zweiseitig eingespannt ist und bei Gaspedalbetätigung von einer Kraft quer zu ihrer Erstreckungsrichtung etwa mittig beaufschlagt wird. Die Blattfeder 21 liegt in einem U-förmigen Halter 22 ein, wobei sie eine im Quersteg 23 des Halters 22 ausgebildete Vertiefung 24 überspannt und nur mit ihren beiden schmalen Endseiten auf dem Querstrich 22 aufliegt. In den beiden etwa trapezförmig ausgebildeten Schenkeln 25,26 des Halters 22 ist jeweils eine Gleitbohrung 27 bzw. 28 eingebracht. Die beiden Gleitbohrungen 27,28 nehmen eine Welle 29 drehbeweglich auf, auf der drehfest ein Exzenter 18 sitzt. Am Exzenter 18 ist ein Schwenkarm 30 befestigt, der an seinem freien Ende eine Steckvorrichtung 19 zum Aufstecken eines Gaspedals 20 trägt. Bei unbetätigtem Gaspedal 20 liegt der Exzenter 18 an der Blattfeder 21 in deren mittleren Bereich an, ohne auf diese eine Kraft auszuüben. Der Exzenter 18 ist nun so ausgebildet, daß sein Radius über den Drehwinkel anwächst, so daß mit Drehung des Exzenters 18 die Blattfeder 21 zunehmend durchgebogen wird. Durch die drehfeste Verbindung des Exzenters 18 über den Schwenkarm 30 mit dem Gaspedal 20 ist damit die Größe der Durchbiegung der Blattfeder 21 ein Maß für die Stellung des Gaspedals 20.

Auf der vom Exzenter 18 abgekehrten Oberfläche der Blattfeder 21 ist diesem gegenüberliegend der Dehnungsmeßstreifen 15 befestigt, so daß dieser an der Verformung der Blattfeder 21 teilnimmt. Bei der Durchbiegung der Blattfeder 21 wird er wiederum gestreckt und ändert seinen Widerstand. Die Widerstandsänderung wird in der Auswerteeinheit 16 in ein Stellsignal umgewandelt, das einen Sollwert für die Einstellung der Drosselklappe oder des Einspritzventils vorgibt. Zur Befestigung des Halters 22 im Fahrzeug sind vier Befestigungslöcher 52 vorgesehen.

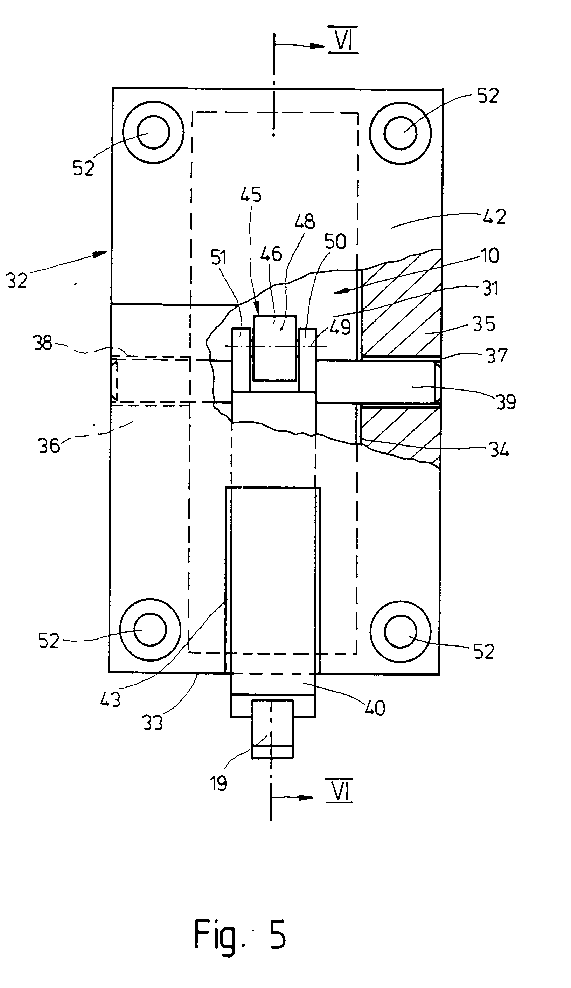

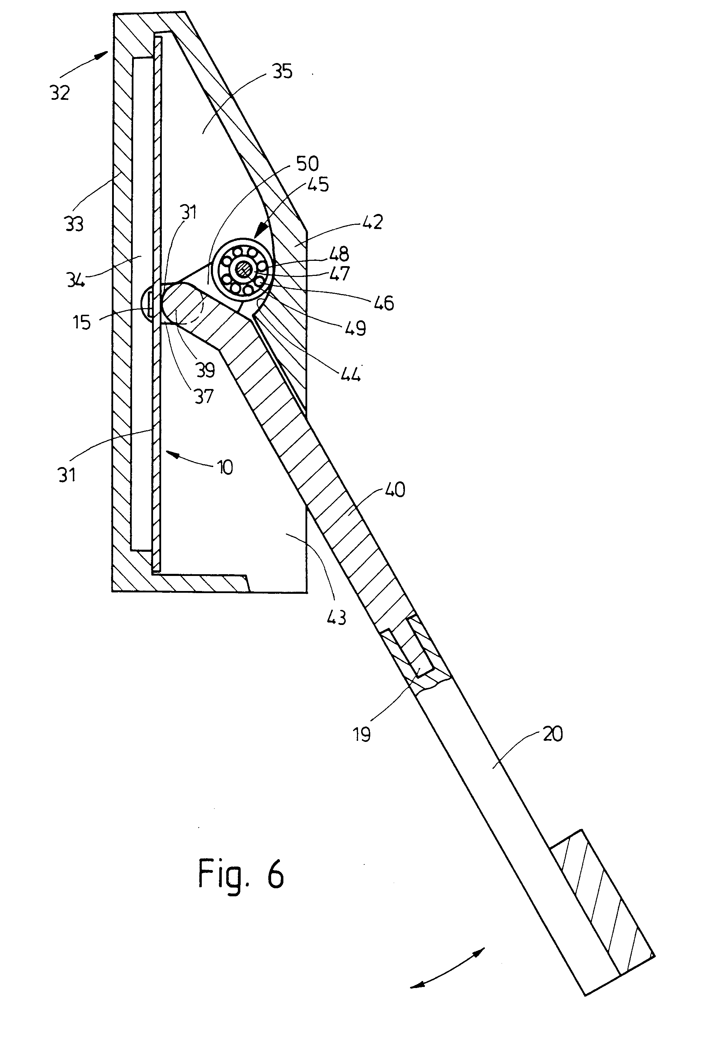

Bei dem in Fig. 5 und 6 als weiteres Ausführungsbeispiel dargestellten Stellungsgeber wird das elastisch verformbare Bauteil 10 wiederum von einer zweiseitig eingespannten Blattfeder 31 gebildet, die in gleicher Weise wie in Fig. 3 und 4 in einem U-förmigen Halter 32 derart aufgenommen ist, daß sie eine Vertiefung 34 im Quersteg 33 des Halters 32 überdeckt und nur mit ihren schmalen Enden auf dem Quersteg 33 aufliegt. Im mittleren Bereich der Blattfeder 31 auf der von dem Quersteg 33 abgekehrten Oberfläche der Blattfeder 31 liegt ein Schwenkarm 40 mit einer Nase 41 an, der die Blattfeder 31 in ihrer beschriebenen Lage im Halter 32 hält, so daß - ebenso wie in Fig. 3 und 4 - eine besondere Befestigung der Blattfeder 31 am Quersteg 33 überflüssig ist. Wie insbesondere aus Fig. 5 ersichtlich ist, sind in den beiden Schenkeln 35,36 Langlöcher 37,38 eingebracht, in welchen eine Welle 39 schwenkbeweglich und axial verschieblich einliegt. Die parallel zueinander verlaufenden Langlöcher 37,38 erstrecken sich dabei quer zur Längserstreckung der Blattfeder 31. Mit der Welle 39 ist der Schwenkarm 40 mit Nase 41 drehfest verbunden.

Die beiden Schenkel 35,36 sind am ihrem vom Quersteg 33 abgekehrten Ende durch eine Abdeckplatte 42 miteinander verbunden, die eine Durchtrittsöffnung 43 für den Schwenkarm 40 aufweist. Auf der Innenfläche der Abdeckplatte 42 ist eine Kurvenbahn 44 ausgebildet, an der sich der mit seiner Nase 41 an der Blattfeder 31 anliegende, im vorderen Bereich abgewinkelt ausgebildete Schwenkarm 40 sich über ein Führungsglied 45 abstützt. Die Kurvenbahn 44 ist dabei so ausgebildet, daß in der Grundstellung des Schwenkarms 40 die Nase 41 an der Blattfeder 31 anliegt, ohne diese zu verformen und daß bei zunehmendem Schwenkwinkel des Schwenkarms 40 die Kurvenbahn 44 über das Führungsglied 45 den Schwenkarm 40 mit seiner Welle 39 in den Langlöchern 37,38 hin zur Blattfeder 31 zunehmend verschiebt. Das Führungsglied 45 ist bei dem Ausführungsbeispiel in Fig. 5 und 6 als Kugel- oder Wälzlager 46 ausgebildet, dessen innerer Lagerring 47 drehfest auf einer Steckachse 49 sitzt, die in zwei vom Schwenkarm 40 abstehenden parallelen Ohren 50,51 gehalten ist, und dessen äußerer Lagerring 48 an der Kurvenbahn 44 anliegt. Der Schwenkarm 40 trägt am freien Ende wiederum die Steckvorrichtung 19, auf der das Gaspedal 20 aufgesteckt ist. Der Halter 32 trägt vier Befestigungslöcher 52, durch welche hier nicht dargestellte Befestigungsschrauben hindurchgreifen, um den Halter 32 im Kraftfahrzeug zu befestigen.

Im mittleren Bereich der Blattfeder 31, und zwar auf der vom Schwenkarm 40 abgekehrten Oberfläche der Blattfeder 31, ist wiederum der Dehnungsmeßstreifen 15 befestigt, so daß er bei der Durchbiegung der Blattfeder 31 infolge Schwenkbewegung des Schwenkarms 40 an deren Verformung teilnimmt und gedehnt wird. Die dadurch herbeigeführte Widerstandsänderung des Dehnungsstreifens 15 wird in der Auswerteeinheit 16 zu einem Stellsignal umgeformt, das wiederum als Sollwert für die Betätigung des Luft- bzw. Kraftstoffzumeßsystems der Brennkraftmaschine des Fahrzeugs dient. Durch entsprechende Ausführung der Kurvenbahn 44 lassen sich dabei alle gewünschten Drehmomentverläufe des Gaspedals 20 über dessen Betätigungswinkel realisieren. Bei entsprechender Abstimmung von Blattfeder 31 und Kurvenbahn 44 wird das Gaspedal 20 bei Entlastung in seine Ruhestellung zurückgestellt. Durch die Reibung zwischen dem Schwenkarm 40 und der Blattfeder 31 kommt es dabei zu einer erwünschten Stabilisierung der Pedalstellung in der Ruhelage.

**Patentansprüche**

1. Stellungsgeber für ein Gaspedal in Kraftfahrzeugen, der ein elektrisches Stellsignal erzeugt, dessen Größe von der Gaspedalstellung bestimmt ist, gekennzeichnet durch ein bei Gaspedalbetätigung elastisch verformbares Bauteil (10), in dessen Verformungsbereich ein Dehnungsmeßstreifen (15) befestigt ist, und eine mit dem Dehnungsmeßstreifen (15) verbundene elektrische Auswerteeinheit (16), die eine Widerstandsänderung des Dehnungsmeßstreifens (15) in ein elektrisches Stellsignal umsetzt.

2. Stellungsgeber nach Anspruch 1, dadurch gekennzeichnet, daß das elastisch verformbare Bauteil (10) von einer einseitig eingespannten Blattfeder (11) gebildet ist, deren freies Ende vom Gaspedal etwa quer zur Längsachse der Blattfeder (11) beaufschlagt wird, und daß der. Dehnungsmeßstreifen (15) auf der Oberfläche der Blattfeder (11) in deren Biegebereich an der Einspannstelle angeordnet ist.

3. Stellungsgeber nach Anspruch 3, dadurch gekennzeichnet, daß die Blattfeder (11) selbst das Gaspedal bildet, die am nicht eingespannten freien Ende einen Gummibelag (14) zum Aufsetzen des Fahrerfußes trägt.

4. Stellungsgeber nach Anspruch 1, dadurch gekennzeichnet, daß das elastisch verformbare Bauteil (10) von einer zweiseitig eingespannten Blattfeder (21;31) gebildet ist, auf welcher etwa mittig der Dehnungsmeßstreifen (15) befestigt ist, und daß die Blattfeder (21;31) im Bereich des Dehnungsmeßstreifens (15) auf ihrer von diesem abgekehrten Oberseite mit einer vom Schwenkweg des Gaspedals (20) abhängigen Kraft etwa quer zu ihrer Erstreckungsrichtung beaufschlagt wird.

5. Stellungsgeber nach Anspruch 4, dadurch gekennzeichnet, daß die Kraft von einem um eine Drehachse (29) schwenkbaren Exzenter (18) aufgebracht wird, der an der Blattfeder (21) anliegt und dessen Radius über den Schwenkwinkel zunimmt, und daß mit dem Exzenter (18) ein quer zur Drehachse (29) sich erstreckender Schwenkarm (30) starr verbunden ist, der mit dem Gaspedal (20) koppelbar ist.

6. Stellungsgeber nach Anspruch 5, dadurch gekennzeichnet, daß die Einspannung der Blattfeder (21) in einem U-förmigen Halter (22) vorgenommen ist, der zwei Schenkel (25,26) und einen die Schenkel (25,26) verbindenden Quersteg (23) aufweist, daß der Quersteg eine Vertiefung (24) trägt, die von der mit den Enden auf dem Quersteg (23) aufliegenden Blattfeder (21) überspannt ist, und daß der Exzenter (18) drehfest auf einer Welle (29) sitzt, die in den beiden Schenkeln (25,26) des Halters (22) schwenkbeweglich gelagert ist.

7. Stellungsgeber nach Anspruch 4, dadurch gekennzeichnet, daß die Kraft von einer an der Blattfeder (31) anliegenden Nase (41) eines Schwenkarms (40) aufgebracht ist, der in mindestens einem etwa senkrecht zur Blattfeder (31) sich erstreckenden Langloch (37,38) schwenk- und axialverschiebbar gehalten ist und sich an einer Kulisse (42) abstützt, deren Kurvenbahn (44) bei einer Schwenkbewegung des Schwenkarms (40) eine zur Blattfeder (31) hin gerichtete Axialverschiebung der Nase (41) erzwingt, und daß der Schwenkarm (40) mit dem Gaspedal (20) koppelbar ist.

8. Stellungsgeber nach Anspruch 7, dadurch gekennzeichnet, daß die Einspannung der Blattfeder (31) in einem U-förmigen Halter (32) vorgenommen ist, der zwei Schenkel (35,36) und einen diesen verbindenden Quersteg (33), sowie eine zum Quersteg (33) parallele Abdeckplatte (42) mit einer Durchtrittsöffnung (43) für den Schwenkarm (40) trägt, daß der Quersteg (33) eine Vertiefung (34) aufweist, die von der mit ihren Enden auf dem Quersteg (33) aufliegenden Blattfeder (31) überspannt wird, daß der Schwenkarm (40) drehfest mit einer Welle (39) verbunden ist, die endseitig in jeweils einem Langloch (37,38) in den Schenkeln (35,36) einliegt und mittig an der Blattfeder (31) anliegt, und daß auf der der Blattfeder (31) zugekehrten Oberfläche der Abdeckplatte (42) die Kurvenbahn (44) ausgebildet ist, auf der sich der Schwenkarm (40) über ein Führungsglied (45) abstützt.

9. Stellungsgeber nach Anspruch 8, dadurch gekennzeichnet, daß das Führungsglied (45) ein in zwei vom Schwenkarm (40) wegstehenden Ohren (50,51) drehbar gelagertes Wälzelement (46) ist.

10. Stellungsgeber nach Anspruch 9, dadurch gekennzeichnet, daß als Wälzelement ein Kugel- oder Wälzlager (46) verwendet wird, dessen innerer Lagerring (47) drehfest auf einer in den Ohren (50,51) gehaltenen Steckachse (49) sitzt und dessen äußerer Lagerring (48) an der Kurvenbahn (44) anliegt.

11. Stellungsgeber nach einem der Ansprüche 6 - 10, dadurch gekennzeichnet, daß der Halter (22,32) Bohrungen (52) zum Durchstecken von Befestigungsmitteln aufweist.

12. Stellungsgeber nach einem der Ansprüche 5 - 11, dadurch gekennzeichnet, daß der Schwenkarm (30;40) eine Steckvorrichtung (19) zum Aufstecken des Gaspedals (20) trägt.

Fig. 1

Fig. 2

Fig. 3

Fig. 4

Fig. 5

Fig. 6